Europäisches Patentamt

European Patent Office

Office européen des brevets

(19)

(11) **EP 1 508 825 A1**

(12) **EUROPEAN PATENT APPLICATION**

(43) Date of publication:
**23.02.2005 Bulletin 2005/08**

(51) Int Cl.7: **G02B 6/255**

(21) Application number: **03018562.3**

(22) Date of filing: **18.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **CCS Technology, Inc.**
**Wilmington, DE 19803 (US)**

(72) Inventors:
 • **Contag, Karsten**
  **81373 München (DE)**
 • **Kopold, Richard**
  **82229 Hechendorf (DE)**

(74) Representative: **Epping Hermann & Fischer**
 **Ridlerstrasse 55**
 **80339 München (DE)**

(54) **Method and device for determining the angular position of a polarization maintaining fiber**

(57)     A method for determining the angular position of at least one axial optical asymmetry of a cylindrical body, in particular of an optical fiber, provides for the following steps: the body (4) is illuminated by a light beam (7) and is rotated through an angular interval ($\alpha$1 - $\alpha$4) about its longitudinal axis. At a plurality of different angular rotational positions ($\alpha$), a respective distribution function (I) of an intensity of light, which has passed through the body, in a direction (X) perpendicular to the axis of the body is determined. The distribution functions (I) are analyzed subsequently thereby determining, at a plurality of different angular rotational positions ($\alpha$), at least one respective characteristic value (S, M) calculated from a plurality of light intensity values along a respective one of the distribution functions (I). The plurality of calculated characteristic values (S, M) as a function of the angular rotational position ($\alpha$) of the body is analyzed to determine an extremum (d) of the plurality of characteristic values being a measure of the angular rotational position ($\alpha$) of the body. According to the invention, an alignment process provides for higher accuracy.

FIG 1

EP 1 508 825 A1

**Description**

The invention is directed to a method and device for determining the angular position of at least one axial optical asymmetry of a cylindrical body, in particular of a polarization maintaining optical fiber. The body is positioned in an arbitrary angular start position about its longitudinal axis, wherein the body is illuminated by a light beam in a direction approximately perpendicular to the longitudinal axis of the body, the light beam comprising light for which portions of the body are transparent. In a subsequent step, the body is rotated through an angular interval. The invention is also directed to a device for determining the angular position of at least one axial optical asymmetry of a cylindrical body, in particular of a polarization maintaining optical fiber.

In the cross-sectional plane of an optical fiber such as a polarization maintaining optical fiber two orthogonal axes of symmetry with respect to the optical properties of the fiber exist so that the fiber provides for a two-fold symmetry with respect to its optical properties. For splicing of polarization maintaining fibers, it is important to adjust the angular position of these axes between the two fibers in some predetermined way. Usually, there is a need to align the axes between the two fibers so that the optical properties of the fibers do not change across the spliced joint region of the fibers. The aim is that the polarizational properties of light that is transmitted from one fiber to the other fiber across that joint region remain unchanged.

It is also possible to conceive optical fibers which comprise, in the cross-sectional plane, only one axis of symmetry, for example if the fiber comprises one non-axial longitudinal inhomogeneity extending along the fiber such as a second core. Likewise, optical fibers with more than two axes of symmetry are conceivable if more than two non-axial longitudinal inhomogeneities extend along the fiber. The present invention pertains to all of these fibers and, more generally, to bodies of substantially cylindrical shape which comprise at least one axial optical asymmetry.

The prior art provides for several methods to determine the angular position of optical asymmetries and/or to align two optical fibers with respect to their optical asymmetries.

In US 5 013 345 and EP 0 319 041 B1 two fibers to be spliced are observed using a core direct monitoring method to obtain images of the fibers. Both fibers are rotated until the images of both fibers coincide with a reference image that has been recorded at an earlier stage. Such a reference image and the recording thereof may vary depending upon different types of polarization maintaining fibers and is rather time-consuming since a reference image needs to be recorded for each type of fiber. In EP 0 319 041 B1, an image of one of the fibers is taken as a reference image and the second fiber is rotated until the image of the second fiber coincides with that reference image. Here, both fibers to be spliced need to be of the same type, since for different types of fibers, e.g. so-called panda fibers with an elliptical core fiber, the images differ considerably and a coincidence of images is not well defined. Moreover, such a method is not applicable for determining the angular position of optical asymmetries of a single optical fiber, e.g. when a single optical fiber is to be connected with a predetermined angular orientation to a second optical body, for example to a laser.

In US 5 417 733, the fibers are illuminated wherein the transmitted intensity of light is recorded while rotating the fibers. The recorded intensity function is then correlated with the rotation angle to determine the angular orientation of the fibers to bring them into angular alignment. The angular alignment may provide for a rather low accuracy as the transmitted light intensity as a function of the angular orientation varies only slightly and in a sinusoidal way. In another embodiment of this method, polarized light is used for illumination in combination with a polarization filter in front of the light detector which detects light transmitted through the fiber. This way, the accuracy of alignment is increased but complexity is added to the system as additional polarization filters are used which have to be angularly adjusted.

In EP 0 707 226 A1, the irradiating light transmitted through the fibers is observed by a television camera. After having recorded a plurality of images, the positions of luminent peaks are extracted therefrom. The fibers are then orientated in such that the positions of luminent peaks or numerical values calculated from these positions, respectively, are in agreement between both fibers. Since this method relies on a comparison between two fibers, the aligning procedure may lose accuracy when two fibers of different types are aligned to each other. Moreover, this method is not applicable for an angular alignment procedure of a single optical fiber. Furthermore, the positions of the luminent peaks, i.e. of a panda type fiber, as a function of the angle of rotation of the fiber may vary only slightly which provides for lower accuracy performance.

In WO 95/14945, US 5 758 000, and US 5 850 283, the difference of transmitted light intensity between light having passed through the central part of an optical fiber, forming a bright region in the image of the fiber, and light having passed through regions adjacent to the central part of the fiber, forming a dark region in the image of the fiber, is recorded for different angles of rotation of the fiber. In order to align two fibers to each other with respect to their angular orientation, this intensity difference as a function of the rotation angle is taken for both fibers, and the difference in angular orientation between the two fibers is determined by correlating of both functions. In order to determine the angular orientation of one single fiber, this function of intensity difference is compared to a reference function determined beforehand for that particular type of fiber. According to this method, data need to be taken for at least half of a full turn of the fiber and preferably a full turn. The accuracy of the determined angular orientation depends on the number of data taken during the angular interval so that, for a high-precision alignment procedure, the number of data to be taken and thus the memory to store the data and the process time increases considerably.

In US 5 850 283, an improved procedure is described in which, for a more precise determination of the angular orientation, more densely spaced data points are taken only within a small angular interval where the intensity difference has its most rapid variation. Here, for certain types of polarization maintaining fibers, such as elliptical core fibers, the variation of the intensity difference as a function of the angular position is rather low which limits the accuracy of the angular orientation process.

It is accordingly an object of the present invention to provide a method and a device for determining the angular position of at least one axial optical asymmetry of a cylindrical body, in particular of an optical fiber, which provide for a high accuracy in an alignment process.

The object is solved by a method for determining the angular position of at least one axial optical asymmetry of a cylindrical body according to claim 1 and by a device for determining the angular position of at least one axial optical asymmetry of a cylindrical body according to claim 10.

According to the invention, the method as mentioned in the introductory part of the description provides for the additional step of determining, at a plurality of different angular rotational positions of the body, a respective distribution function of an intensity of light, which has passed through the body, in a direction approximately perpendicular to the longitudinal axis of the body. The plurality of said distribution functions is analyzed, thereby determining, at a plurality of different angular rotational positions of the body, at least one respective characteristic value calculated from a plurality of light intensity values along a respective one of the distribution functions associated with a corresponding angular rotational position, the characteristic value selected from the group consisting of at least one respective symmetry value and at least one respective moment value of a respective distribution function. A plurality of said calculated characteristic values is determined as a function of the angular rotational position of the body. The plurality of calculated characteristic values as a function of the angular rotational position of the body is analyzed to determine an extremum of the plurality of calculated characteristic values being a measure of the angular rotational position of the body.

In a preferred embodiment of the invention, a plurality of distribution functions is analyzed, thereby determining, at a plurality of different angular rotational positions of the body, at least one respective symmetry value of a respective distribution function calculated from a difference between the respective distribution function and the respective distribution function mirrored about its center.

In another preferred embodiment of the invention, a plurality of distribution functions is analyzed, thereby determining, at a plurality of different angular rotational positions of the body, at least one respective second moment value of a respective distribution function calculated from squared values of the respective distribution function.

The invention provides for the advantage that the alignment process does not rely on a comparison of data to some prior taken reference data. Thus, the method according to the invention is less susceptible to changes of the shape of the optical asymmetry which can occur, e.g. between polarization maintaining fibers of the same type but manufactured by different manufacturers, or between polarization maintaining fibers of the same type which are designed for different wavelengths of transmitted light. Moreover, e.g. in an alignment process to adjust the relative angular orientation between two fibers, the angular orientation can be determined for each of the fibers independently. As a consequence, the method according to the invention is even applicable for an alignment process in which the two fibers to be aligned relative to each other are of different types or provide for different shapes of optical asymmetry.

A further advantage is that the determined plurality of calculated characteristic values as a function of the angular rotational position of the body, such as a plurality of said respective symmetry values, can be calculated from an intensity distribution which is more susceptible to the angular orientation than an intensity function of transmitted light correlated with the rotation angle as disclosed in US 5 417 733, or the position of luminent peaks such as disclosed in EP 0 707 226 A1, or the difference of transmitted light intensity as disclosed in WO 95/14945. According to the invention, an alignment process thus provides for higher accuracy.

Further preferred embodiments of the invention are disclosed in the respective dependent claims.

The invention will now be described by way of non-limiting embodiments with reference to accompanying drawings, in which:

Figure 1    shows a cross-sectional view illustrating an arrangement for illuminating an optical fiber and for determining the angular position of the optical fiber,

Figure 2    shows diagrams of fiber transmission intensity distribution functions for different respective angular rotational positions of the fiber,

Figure 3    shows a plurality of calculated symmetry values as a function of the angular rotational position of the fiber,

Figure 4    shows a plurality of second moment values calculated from squared values of the respective distribution function as a function of the angular rotational position of the fiber.

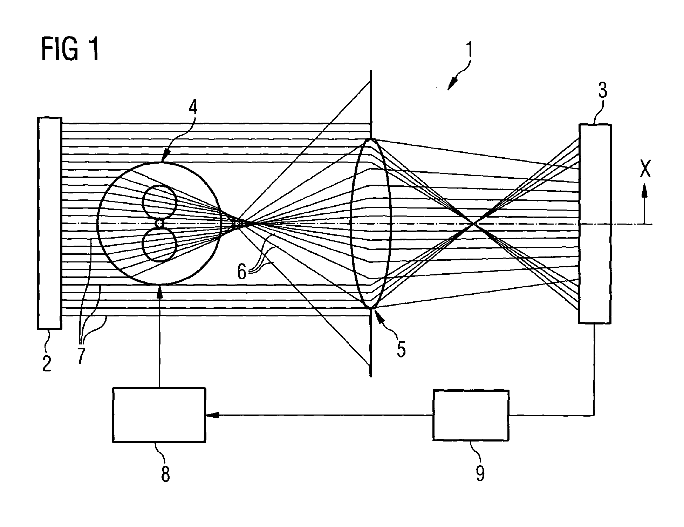

Figure 1 shows a cross-sectional view illustrating schematically an arrangement 1 for illuminating an optical fiber 4 and for determining the angular position of the fiber 4. The arrangement provides for a light source 2 positioned to illuminate the fiber 4 with a light beam 7 in a direction approximately perpendicular to the longitudinal axis of the fiber, the light beam comprising light for which portions of the fiber are basically transparent. The light which is transmitted through the fiber 4 is detected by a CCD camera 3 which, in combination with an optical system placed in front of the camera, is termed as an imaging system in the following description. For example, the optical system placed in front of the camera 3 provides for a stop and/or lens 5 for focusing light 6 which is transmitted through the fiber 4.

The optical system is adjusted in such that the intensity distribution recorded by camera 3 (which corresponds to light transmitted through the fiber and the subsequently arranged stop/lens 5 of the imaging system) shows distinct features that change when the fiber is rotated about its longitudinal axis which runs approximately perpendicular to the axis of the light beam 7. Reference numeral 8 denotes means (shown only schematically for simplicity purposes, such means are well known in practice) for positioning the fiber 4 in an arbitrary angular start position about its longitudinal axis and for rotating the fiber 4 through an angular interval. Reference numeral 9 denotes means (such as a computer system or data processing hardware) for determining (in cooperation with the optical system) a respective one of the distribution functions, and for analyzing a plurality of said distribution functions thereby processing a series of subsequent calculating steps, as set forth in more detail in the following. The means 9 are connected to the positioning means 8 for controlling a rotating movement of the fiber 4.

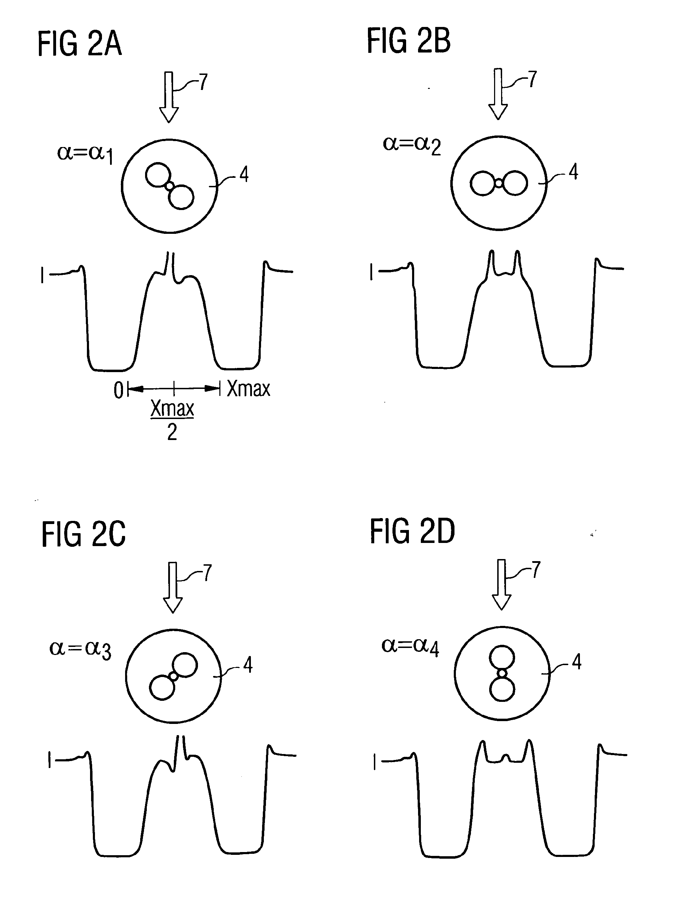

Exemplary diagrams showing fiber transmission intensity distributions captured by camera 3 along the direction X perpendicular to the longitudinal axis of the fiber are shown in figure 2 for different angles $\alpha$ of rotation of the optical fiber 4. An intensity distribution can be determined either by taking values of the intensity along a single column X of the CCD camera 3 wherein the column X is oriented substantially perpendicular to the longitudinal axis of the fiber. Alternatively, a plurality of columns of the camera may be used for taking average values along a direction which is oriented substantially in parallel to the longitudinal axis of the fiber. As can be seen from figure 2a to figure 2d, the imaging system is adjusted in such that the part of the intensity distribution denoting the intensity of light which passed through the fiber in a central region of the fiber (and which is termed herein as fiber transmission intensity distribution) changes its shape with different angular rotational positions of the optical asymmetries of the fiber. By analyzing the shape of a plurality of transmission intensity distribution functions, the angular orientation of the optical asymmetries may be determined as follows:

The fiber 4 is positioned in an arbitrary angular start position $\alpha = \alpha1$ about its longitudinal axis, wherein the fiber 4 is illuminated by light beam 7 in a direction approximately perpendicular to the longitudinal axis of the fiber. As can be seen from figure 2a through figure 2d, the fiber 4 is rotated through the angular interval $\alpha1 - \alpha4$. At the different angular rotational positions $\alpha1$ through $\alpha4$, a respective distribution function I of the intensity of light which has passed through the fiber in the direction X perpendicular to the longitudinal axis of the fiber 4 is determined.

As can be seen from figure 2, especially two angular rotational positions of the optical asymmetries of the fiber 4 exist which are characterized by a respective distribution function I having a high degree of symmetry. Accordingly, these two angular positions can be found by analyzing the plurality of distribution functions I, thereby determining, at the plurality of different angular rotational positions $\alpha$ of the fiber 4, at least one respective characteristic value calculated from a plurality of light intensity values along a respective one of the distribution functions I associated with a corresponding angular rotational position $\alpha$.

In particular, according to a preferred embodiment of the invention, at a plurality of different angular rotational positions $\alpha$ of the fiber, at least one respective symmetry value S of a respective distribution function I is calculated from a difference between the respective distribution function I and the respective distribution function I mirrored about its center. As a result, a plurality of said calculated characteristic symmetry values S is determined as a function of the angular rotational position $\alpha$ of the fiber. The plurality of symmetry values S as a function of the angular rotational position of the fiber is termed herein as a so-called "figure of shape" which is, in this preferred embodiment, calculated from the difference between the intensity distribution and the same intensity distribution mirrored about its center. In other words, if Ix denotes the intensity at position x along a column where x is a value between 0 and Xmax, and the center of the intensity distribution function is at x = Xmax/2, a symmetry value S corresponding to the symmetry can be calculated by

$$S = \sum_{x=0}^{X\max} \left| I_x - I_{X\max-x} \right| \cdot$$

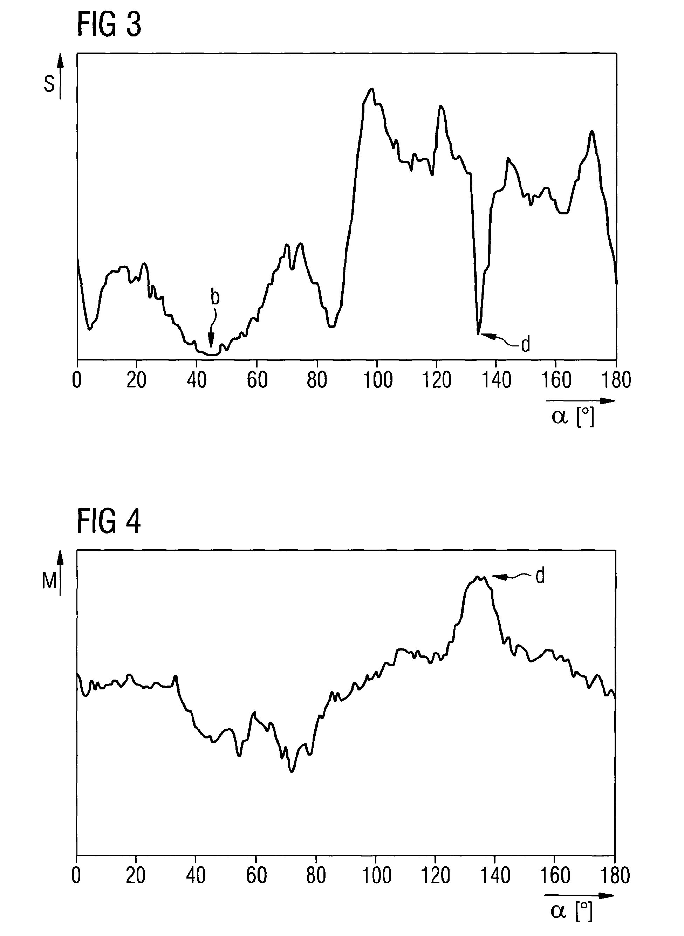

For a polarization maintaining fiber of the so-called panda type such symmetry value S as a function of the angular rotational position of the fiber is shown in figure 3. The part of the curve corresponding to an angular rotational position as shown in figure 2b is denoted by "b", the part of the curve corresponding to an angular rotational position of the fiber as shown in figure 2d is denoted by "d". As shown in figure 3, for the angular rotational positions of the fiber according to figure 2b and 2d, the function of the symmetry value S as a function of the angular rotational position $\alpha$ of the fiber comprises an extremum, i.e. a minimum. Moreover, the curve has its steepest gradient around position "d", i.e. the integral of the absolute value of the gradient, taken within a certain angular interval around that minimum, has the highest value, whereas the variation around minimum "b" is rather low. This way, the angular rotational position of the fiber can be derived unambiguously from the function of the symmetry value S as a function of the angular rotational position $\alpha$ of the fiber.

In another preferred embodiment of the invention, the respective distribution functions I corresponding to different angular rotational positions of the fiber are analyzed differently. Accordingly, at a plurality of different angular rotational positions of the fiber, a respective second moment value M of a respective distribution function I calculated from squared values of the respective distribution function is determined. Subsequently, the plurality of said calculated second moment values M as a function of the angular rotational position $\alpha$ of the fiber identify another "figure of shape" which is suitable to identify the angular orientation of optical asymmetries of the fiber. For a panda type polarization maintaining fiber, the second moment M of a respective distribution function I is calculated as follows: if Ix denotes the intensity of light at position x along a column where x is a value between 0 and Xmax and the center of the intensity distribution function I is at x = Xmax/2, a value M corresponding to the second moment of the squared intensity distribution function I can be calculated by

$$M = \frac{\sum\limits_{x=0}^{X\max}\left[ I_x^2 \cdot \left| x - \frac{X\max}{2} \right| \right]}{\sum\limits_{x=0}^{X\max} I_x^2} .$$

For a panda type polarization maintaining fiber such a second moment value M as a function of the angular rotational position $\alpha$ of the fiber is shown in figure 4. The angle of rotation at the maximum of this function, denoted by "d" in figure 4, corresponds to an angular orientation of the fiber as shown in figure 2d. This way, the angular orientation of the fiber can be derived unambiguously from the function of the second moment M of the squared intensity distribution function I.

According to other embodiments of the present invention, different types of characteristic values calculated from a plurality of light intensity values along a respective one of the distribution functions associated with a corresponding angular rotational position of the fiber (other types of "figures of shape") may be used to determine the angular orientation of optical asymmetries of a cylindrical body such as an optical fiber.

Accordingly, in another embodiment, a plurality of distribution functions I is analyzed thereby determining, at a plurality of different angular rotational positions $\alpha$ of the body, at least one respective moment value of arbitrary order of a respective distribution function I calculated from arbitrary powers of the respective distribution function.

Such characteristic value, as well as the other above-mentioned types of characteristic values, can be combined by some mathematical operation to determine a specific "figure of shape" applicable to be used for analyzation purposes. Such a "figure of shape" as a function of the angular rotational position of the body is suitable for the determination of the angular orientation if it exhibits an extremum (maximum or minimum) at a specific known angular orientation of the optical asymmetries of the body, and if this extremum is recognizable for a predetermined spacing of angular positions for which the "figure of shape" is calculated, independently of the angular start position at which the alignment process is started. Moreover, a "figure of shape" is applicable for the determination of the angular orientation of the body if, in the region where the extremum occurs, the gradient of the function is rather high so that the angular orientation may be determined with high accuracy.

According to another embodiment of the present invention, the angular orientation of optical asymmetries is determined by analyzing two or more "figures of shape". In a first step, a first plurality of distribution functions I is analyzed, thereby determining, at a first plurality of different angular rotational positions $\alpha$ of the body, at least one respective first characteristic value (such as M) calculated from a plurality of light intensity values along a respective one of the distribution functions. In a second step, a second plurality of distribution functions I is analysed, thereby determining, at a second plurality of different angular rotational positions $\alpha$ of the body, at least one respective second characteristic value (such as S) calculated from a plurality of light intensity values along a respective one of the distribution functions.

For example, for a panda type polarization maintaining fiber, in the first step, an extremum of the plurality of calculated first characteristic values (for example, second moment values M) is determined being a measure of a first value of the angular rotational position α of the fiber. In the second step, an extremum of the plurality of calculated second characteristic values (for example, symmetry values S) is determined being a measure of a second, i.e. more accurate, value of the angular rotational position α of the fiber. Preferably, the plurality of calculated second characteristic values (i.e. the function of S) is analyzed only within a reduced angular interval where the function has its steepest gradient around the extremum, such as the part of the curve which is denoted by "d" in figure 3.

According to another preferred embodiment of the invention, the angular orientation of the optical asymmetries is determined with the following procedure: starting with an arbitrary angular position of the fiber, the fiber is rotated through an angular interval of at least 180°, or, preferably, 360° if the fiber contains a one-fold axial optical symmetry. The interval of 180° is preferred if the fiber contains a two-fold symmetry. At several angular positions within that angular interval, one or more pluralities of characteristic values as a function of the angular rotational position of the fiber are calculated from the respective fiber transmission intensity distributions as detected with the imaging system. By analyzing the extrema of the function or the functions, respectively, of this or these "figure(s) of shape" the value of the angular position of the optical asymmetries in relation to the angular start position or in relation to a predetermined angular reference position of the fiber is determined.

After the angular position of the optical asymmetries has been determined, the fiber or cylindrical body is rotated so that the optical asymmetries have a certain angular position with respect to the predetermined angular orientation.

When, according to one embodiment of the invention, two optical fibers are spliced together, the fiber ends are positioned close to each other. In may be appropriate to illuminate both fibers simultaneously by the same light beam and to detect the distribution function of an intensity of light transmitted through the fibers simultaneously by the same imaging system for both fibers. Moreover, generally other detectors such as a CCD linear array or a television camera are applicable to detect an intensity distribution, instead of using a CCD camera for detecting the light.

In order to reduce the time needed for identifying the angular orientation, according to another preferred embodiment of the invention, two imaging systems may be employed illuminating the body from multiple directions, which are positioned to each other enclosing an angle between the different directions, i.e. enclosing an angle of 90 degrees. In this case the angular interval for rotating the body is at least 90 degrees and preferably 270 degrees if the fiber is of one-fold symmetry, and preferably 90 degrees if the fiber is of two-fold symmetry.

Within such angular interval for a plurality of angular rotational positions one or more "figures of shape" are calculated from the intensity distribution functions taken by both imaging systems. Combining the data obtained by both imaging systems (taking into account the enclosed angle between the imaging systems) a "figure of shape" as a function of the angle of rotation is obtained which is equivalent to the "figure of shape" as a function of the angle of rotation that would have been obtained if only one imaging system was used and the angular rotational interval was extended by another 90 degrees.

In order to achieve higher accuracy in the determination of the angular rotational position ,i.e. to obtain information about the angular rotational position between the discrete angular positions at which "figures of shape" are directly calculated from intensity distribution functions, these directly calculated values can be interpolated, for example by a polynomial. The angular rotational position can be determined by analyzing this interpolating function.

In a preferred embodiment of the invention, the angular orientation of at least one optical asymmetry of a fiber or cylindrical body, respectively, is determined in two or more steps. In a first step, the fiber or body is rotated as described before herein within a first angular interval of at least 180 degrees (or 90 degrees if two imaging systems with an enclosed angle of 90 degrees were used). For a given first spacing of angular rotational positions within that first angular interval one or more "figures of shape" are calculated from the fiber transmission intensity distribution. A first value of the angular rotational position of the fiber or body is determined from the function/the functions of this/ these figure(s) of shape as a function of the angle of rotation.

In a second step, a second angular interval that is smaller than the first angular interval is defined in the region where a "figure of shape" calculated in the first step has its steepest gradients around an extremum. The fiber or body is rotated through that second angular interval and, for a second angular spacing of angular rotational positions within that second angular interval, said "figure of shape" is newly calculated from the fiber transmission intensity distribution. Here, said second spacing of angular rotational positions is smaller than the first spacing of angular rotational positions. This way, in the second step, a second value of the angular orientation of the fiber or body is determined which is more accurate than the first value of the angular orientation determined in the first step. This procedure may be repeated iteratively until the angular orientation of the fiber or body is determined to a sufficient accuracy.

The method described herein may be used in a splicing process for the splicing of two optical fibers which each comprise at least one optical asymmetry. The splice may afford to be made with a predetermined angle between the angular rotational positions of the asymmetries of the fibers. In this case, the angular position of the asymmetry is determined for each fiber separately, either for both fibers simultaneously or for one fiber after the other. Subsequently one or both fibers are rotated so that the optical asymmetry of each of the fibers has a predetermined angular rotational position in relation to the other fiber. The fibers are positioned such that the end faces are placed close to or opposite to each other, with the longitudinal axes of the fibers substantially aligned to each other or at least in parallel to each other. The fiber ends are spliced in that position, i.e., are connected by heating or melting the end surfaces of the fibers. In particular, the defined angle between the optical asymmetries of both fibers is zero, so that the optical asymmetries of both fibers are aligned to each other.

**Claims**

1. Method for determining the angular position of at least one axial optical asymmetry of a cylindrical body, in particular of an optical fiber, providing the steps of:

   - positioning the body (4) in an arbitrary angular start position ($\alpha$1) about its longitudinal axis,
   - illuminating the body (4) by a light beam (7) in a direction approximately perpendicular to the longitudinal axis of the body, the light beam comprising light for which portions of the body are transparent,
   - rotating the body (4) through an angular interval ($\alpha$1 - $\alpha$4) ,

   **characterized by**

   - determining, at a plurality of different angular rotational positions ($\alpha$) of the body (4), a respective distribution function (I) of an intensity of light, which has passed through the body, in a direction (X) approximately perpendicular to the longitudinal axis of the body,
   - analyzing a plurality of said distribution functions (I) thereby determining, at a plurality of different angular rotational positions ($\alpha$) of the body (4), at least one respective characteristic value (S, M) calculated from a plurality of light intensity values along a respective one of the distribution functions (I) associated with a corresponding angular rotational position, the characteristic value selected from the group consisting of at least one respective symmetry value (S) and at least one respective moment value (M) of a respective distribution function,
   - determining a plurality of said calculated characteristic values (S, M) as a function of the angular rotational position ($\alpha$) of the body,
   - analyzing the plurality of calculated characteristic values (S, M) as a function of the angular rotational position ($\alpha$) of the body to determine an extremum (d) of the plurality of calculated characteristic values being a measure of the angular rotational position ($\alpha$) of the body.

2. The method according to claim 1,
   **characterized by**
   analyzing the plurality of calculated characteristic values (S, M) as a function of the angular rotational position ($\alpha$) of the body to determine a gradient or an integrated value of an absolute value of a gradient within an angular interval.

3. The method according to claim 1 or 2,
   **characterized by**
   analyzing a plurality of distribution functions (I) thereby determining, at a plurality of different angular rotational positions ($\alpha$) of the body, at least one respective symmetry value (S) of a respective distribution function (I) calculated from a difference between the respective distribution function and the respective distribution function mirrored about its center (Xmax/2).

4. The method according to anyone of claims 1 to 3,
   **characterized by**
   analyzing a plurality of distribution functions (I) thereby determining, at a plurality of different angular rotational positions ($\alpha$) of the body, at least one respective second moment value (M) of a respective distribution function calculated from squared values of the respective distribution function.

5. The method according to anyone of claims 1 to 4,
   **characterized by**
   analyzing a plurality of distribution functions (I) thereby determining, at a plurality of different angular rotational

positions ($\alpha$) of the body, at least one respective moment value of arbitrary order of a respective distribution function calculated from arbitrary powers of the respective distribution function.

**6.** The method according to anyone of claims 1 to 5, **characterized by**

- in a first step, analyzing a first plurality of distribution functions (I) thereby determining, at a first plurality of different angular rotational positions ($\alpha$) of the body, at least one respective first characteristic value (S, M) ,
- in a second step, analyzing a second plurality of distribution functions (I) thereby determining, at a second plurality of different angular rotational positions ($\alpha$) of the body, at least one respective second characteristic value (S, M).

**7.** The method according to claim 6, **characterized by**

- in the first step, determining an extremum (d) of the plurality of calculated first characteristic values (S, M) being a measure of a first value of the angular rotational position ($\alpha$) of the body,
- in the second step, determining an extremum (d) of the plurality of calculated second characteristic values (S, M) being a measure of a second, i.e. more accurate, value of the angular rotational position ($\alpha$) of the body.

**8.** The method according to anyone of claims 1 to 7, **characterized by**
rotating the body (4) within an angular interval of at least 180 degrees, or 360 degrees if the body contains a one-fold axial optical symmetry.

**9.** The method according to anyone of claims 1 to 8, **characterized by**

- employing more than one imaging system (2, 3, 5) to illuminate the body (4) from multiple directions, which are positioned to each other enclosing an angle between the different directions, i.e. enclosing an angle of 90 degrees,
- operating the imaging systems to combine data obtained with each of the imaging systems.

**10.** A device for determining the angular position of at least one axial optical asymmetry of a cylindrical body, in particular of a polarisation maintaining optical fiber, providing the steps of:

- means (8) for positioning the body (4) in an arbitrary angular start position ($\alpha$1) about its longitudinal axis,
- means (2) for illuminating the body by a light beam (7) in a direction approximately perpendicular to the longitudinal axis of the body, the light beam comprising light for which portions of the body (4) are transparent,
- means (8) for rotating the body (4) through an angular interval ($\alpha$1 - $\alpha$4) ,

**characterized by**

- means (3, 5, 9) for determining, at a plurality of different angular rotational positions ($\alpha$) of the body (4), a respective distribution function (I) of an intensity of light, which has passed through the body, in a direction (X) approximately perpendicular to the longitudinal axis of the body,
- means (9) for analyzing a plurality of said distribution functions (I) thereby determining, at a plurality of different angular rotational positions ($\alpha$) of the body, at least one respective characteristic value (S, M) calculated from a plurality of light intensity values along a respective one of the distribution functions (I), the characteristic value (S, M) selected from the group consisting of at least one respective symmetry value (S) and at least one respective moment value (M) of a respective distribution function,
- means (9) for determining and storing a plurality of said calculated characteristic values (S, M) as a function of the angular rotational position ($\alpha$) of the body,
- means (9) for analyzing the plurality of calculated characteristic values (S, M) as a function of the angular rotational position ($\alpha$) of the body to determine an extremum (d) of the plurality of calculated characteristic values being a measure of the angular rotational position of the body,
- wherein the means (9) for analyzing the plurality of calculated characteristic values (S, M) are connected to means (8) for controlling a rotating movement of the body (4) .

# FIG 1

# FIG 2A

$\alpha = \alpha_1$

7

4

$0 \longleftrightarrow Xmax$

$\dfrac{Xmax}{2}$

# FIG 2B

$\alpha = \alpha_2$

7

4

# FIG 2C

$\alpha = \alpha_3$

7

4

# FIG 2D

$\alpha = \alpha_4$

7

4

FIG 3

FIG 4

## EUROPEAN SEARCH REPORT

**Application Number**

EP 03 01 8562

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 253 448 A (SUMITOMO ELECTRIC INDUSTRIES) 30 October 2002 (2002-10-30) * the whole document * | 1-10 | G02B6/255 |
| A | US 2002/166953 A1 (SAITO SHIGERU ET AL) 14 November 2002 (2002-11-14) * abstract; figures * * page 1, paragraph 9 - paragraph 12 * | 1-10 | |
| D,A | EP 0 774 678 A (ERICSSON TELEFON AB L M) 21 May 1997 (1997-05-21) * the whole document * | 1-10 | |
| A | US 5 677 973 A (YUHARA TOSHIYA ET AL) 14 October 1997 (1997-10-14) * abstract; figures 5-14,22,23 * | 1-10 | |
| D,A | EP 0 707 226 A (SUMITOMO ELECTRIC INDUSTRIES) 17 April 1996 (1996-04-17) * abstract; figure 12 * | 1 | |
| D,A | EP 0 319 041 A (FUJIKURA LTD) 7 June 1989 (1989-06-07) * abstract; figure 7C * | 1 | **TECHNICAL FIELDS SEARCHED (Int.Cl.7)** G02B |
| A | US 6 203 214 B1 (WESSON LAURENCE N) 20 March 2001 (2001-03-20) * the whole document * | 1 | |

The present search report has been drawn up for all claims

| Place of search | Date of completion of the search | Examiner |
|---|---|---|
| THE HAGUE | 20 January 2004 | Faderl, I |

EP 1 508 825 A1

## ANNEX TO THE EUROPEAN SEARCH REPORT
## ON EUROPEAN PATENT APPLICATION NO.

EP 03 01 8562

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2004

| Patent document cited in search report | | Publication date | Patent family member(s) | | Publication date |
|---|---|---|---|---|---|
| EP 1253448 | A | 30-10-2002 | JP | 2002328253 A | 15-11-2002 |
| | | | EP | 1253448 A2 | 30-10-2002 |
| | | | US | 2002159724 A1 | 31-10-2002 |
| US 2002166953 | A1 | 14-11-2002 | JP | 2002333384 A | 22-11-2002 |
| EP 0774678 | A | 21-05-1997 | SE | 506956 C2 | 09-03-1998 |
| | | | EP | 0774678 A1 | 21-05-1997 |
| | | | JP | 9179003 A | 11-07-1997 |
| | | | US | 5758000 A | 26-05-1998 |
| US 5677973 | A | 14-10-1997 | JP | 8015563 A | 19-01-1996 |
| | | | JP | 8015562 A | 19-01-1996 |
| | | | CA | 2153030 A1 | 02-01-1996 |
| | | | DE | 19523742 A1 | 04-01-1996 |
| EP 0707226 | A | 17-04-1996 | JP | 3168844 B2 | 21-05-2001 |
| | | | JP | 8114720 A | 07-05-1996 |
| | | | CN | 1131279 A | 18-09-1996 |
| | | | DE | 69522524 D1 | 11-10-2001 |
| | | | DE | 69522524 T2 | 06-06-2002 |
| | | | EP | 0707226 A1 | 17-04-1996 |
| | | | US | 5611015 A | 11-03-1997 |
| EP 0319041 | A | 07-06-1989 | JP | 1225906 A | 08-09-1989 |
| | | | JP | 2649236 B2 | 03-09-1997 |
| | | | JP | 1147507 A | 09-06-1989 |
| | | | JP | 1758893 C | 20-05-1993 |
| | | | JP | 4047283 B | 03-08-1992 |
| | | | JP | 1147506 A | 09-06-1989 |
| | | | DE | 3888306 D1 | 14-04-1994 |
| | | | DE | 3888306 T2 | 13-10-1994 |
| | | | EP | 0319041 A2 | 07-06-1989 |
| | | | US | 5013345 A | 07-05-1991 |
| | | | US | 4911524 A | 27-03-1990 |
| US 6203214 | B1 | 20-03-2001 | US | 5417733 A | 23-05-1995 |
| | | | DE | 69813533 D1 | 22-05-2003 |
| | | | EP | 1232730 A1 | 21-08-2002 |
| | | | EP | 0967927 A1 | 05-01-2000 |
| | | | WO | 9830166 A1 | 16-07-1998 |

EPO FORM P0459

For more details about this annex : see Official Journal of the European Patent Office, No. 12/82

13